# EUROPEAN PATENT APPLICATION

(11) **EP 2 960 676 A1**
(43) Date of publication of application: **30.12.2015**
(21) Application number: 15173415.9
(22) Date of filing: 23.06.2015
(51) Int. Cl.: G01S 17/02

(54) **LENS WITH PROXIMITY DETECTION PERFORMANCE IMPROVEMENT LAYER**

(30) Priority: 24.06.2014 US 201414312863
(71) Applicant: BlackBerry Limited, Waterloo, ON N2K 0A7 (CA)
(72) Inventor: BROGA, Antanas Matthew, Waterloo, Ontario N2L 3W8 (CA); LEE, Hsin Chin, Kitchener, Ontario N2M 5J8 (CA); GAO, Yu, Waterloo, Ontario N2K 0A7 (CA)
(74) Representative: Moore, Barry

(57) **Abstract**

It is proposed herein to add a layer to the proximity detector lens of a smart phone. The layer, with beneficial qualities such as high transparency and high refractive index, may be seen to improve proximity sensor performance in the presence of matter deposited on an anti-fingerprint coating of the proximity detector lens.

## Description

### FIELD

The present application relates generally to proximity detection in mobile communication devices and, more specifically, to a mobile communication device with a lens overlaying a proximity detector and where the lens has a layer having qualities that lead to improved proximity detection.

### BACKGROUND

It is common for a modern smart phone to include a proximity sensor. In particular, a proximity sensor is especially of use in smart phones that have a touchscreen. Beneficially, a smart phone may be configured to ignore receipt of input from the touchscreen under certain circumstances. For example, such circumstances may include receipt of input from a proximity sensor that indicates that a user is holding the smart phone against the user's head while, for example, involved in a telephone call. Responsive to the user removing the smart phone from against the user's head, say, at the end of the telephone call or to review data on the smart phone in the midst of the telephone call, input from the proximity sensor may allow the smart phone to resume considering receipt of input from the touch screen.

### SUMMARY

Accordingly there is provided a lens, detection system and mobile device as detailed in the claims that follow. Advantageous features are provided in the dependent claims. An independent method is also provided.

### BRIEF DESCRIPTION OF THE DRAWINGS

Reference will now be made, by way of example, to the accompanying drawings which show example implementations; and in which:
FIG. 1A illustrates a first proximity detector lens with a first amount of matter resting thereon;
FIG. 1B illustrates a second proximity detector lens with a second amount of matter resting thereon;
FIG. 2A illustrates the first proximity detector lens of FIG. 1A with a first emitter of infrared radiation positioned under the first proximity detector lens with a first IR sensor;
FIG. 2B illustrates the second proximity detector lens of FIG. 1B with a second emitter of infrared radiation positioned under the second proximity detector lens with a second IR sensor;
FIG. 3 illustrates an adapted proximity detection system including, in accordance with an embodiment of the present application, an IR emitter and an IR sensor positioned under a third proximity detector lens; and
FIG. 4 illustrates a mobile communication device as an example of a device that may include the adapted proximity detection system of FIG. 3.

### DETAILED DESCRIPTION

Frequently, as a result of the user holding the smart phone against the user's head, there is a transfer of matter from the user's head to the touchscreen of the smart phone. The matter may be, for just three examples, water, sweat and/or oil. In cases for which the smart phone touchscreen is uncoated glass, there is typically minimal adverse effect caused by the presence of the matter. However, modern smart phones often include an anti-fingerprint coating, on the outer surface of the glass screen. The anti-fingerprint coating is specifically designed to reduce the appearance of fingerprints and smudges. However, the properties of the anti-fingerprint coating may have unintended consequences for proximity sensing. That is, when matter is deposited on the anti-fingerprint coated screen of the smart phone, especially in an area of the screen overlaying the proximity sensor, the matter may hamper correct operation of the proximity sensor, which, in turn, may hamper expected operation of the smart phone. For example, if the matter on the anti-fingerprint coated screen of the smart phone prevents the proximity sensor from determining that the smart phone has been taken away from the user's head, the smart phone may not appropriately resume considering receipt of input from the touch screen.

The area of the screen overlaying the proximity sensor may be called a lens.

Although the screen of the typical smart phone is referenced above as glass, a person of ordinary skill in the art of smart phone displays will understand that the material for the screen is often a modern polymer.

It is proposed herein to add a new layer to the inner surface of the proximity detector lens of, for example, a smart phone. The new layer, with beneficial qualities such as high transparency and high refractive index, may be seen to improve proximity sensor performance in the presence of matter on a smart phone touchscreen with an anti-fingerprint coating.

According to an aspect of the present disclosure, there is provided a proximity detector lens. The proximity detector lens includes a hydrophobic layer on a first side of the lens, an infrared transmitting ink layer on a second side of the lens, the infrared transmitting ink layer having an infrared transmitting ink layer refractive index and a proximity detection improvement layer on the infrared transmitting ink layer, the proximity detection improvement layer having a proximity detection improvement layer refractive index that is greater than the infrared transmitting ink layer refractive index.

According to a further aspect of the present disclosure, there is provided a proximity detection system. The system includes an emitter of infrared radiation, a sensor of infrared radiation and a proximity detector lens overlaying the emitter. The lens includes a hydrophobic layer on a first side of the lens, an infrared transmitting ink layer on a second side of the lens, the second side of the lens facing the emitter, the infrared transmitting ink layer having an infrared transmitting ink layer refractive index and a proximity detection improvement layer on the infrared transmitting ink layer, the proximity detection improvement layer having a proximity detection improvement layer refractive index that is greater than the infrared transmitting ink layer refractive index.

According to an even further aspect of the present disclosure, there is provided a mobile communication device. The device includes an emitter of infrared radiation, a sensor of infrared radiation and a display screen. A portion of the display screen is designated as a proximity detector lens overlaying the emitter. The lens includes a hydrophobic layer on a first side of the lens, an infrared transmitting ink layer on a second side of the lens, the second side of the lens facing the emitter, the infrared transmitting ink layer having an infrared transmitting ink layer refractive index and a proximity detection improvement layer on the infrared transmitting ink layer, the proximity detection improvement layer having a proximity detection improvement layer refractive index that is greater than the infrared transmitting ink layer refractive index

Other aspects and features of the present disclosure will become apparent to those of ordinary skill in the art upon review of the following description of specific implementations of the disclosure in conjunction with the accompanying figures.

It is known that there are a variety of technology options for proximity detection. Inductive sensors and capacitive sensors may be grouped together as each using electrical technology. Infrared sensors, ambient light sensors and LASER sensors may be grouped together as each using optical technology. Other options available include sensors employing magnetic technology and sensors employing SONAR technology.

When infrared (IR) radiation is used for proximity detection, an emitter is controlled to emit IR radiation and a sensor is used to determine an extent to which the emitted IR radiation has been reflected back to the sensor. In this proximity detection scheme, an extent of reflected IR radiation that exceeds a threshold may be interpreted as indicative of the smart phone being in close proximity to something.

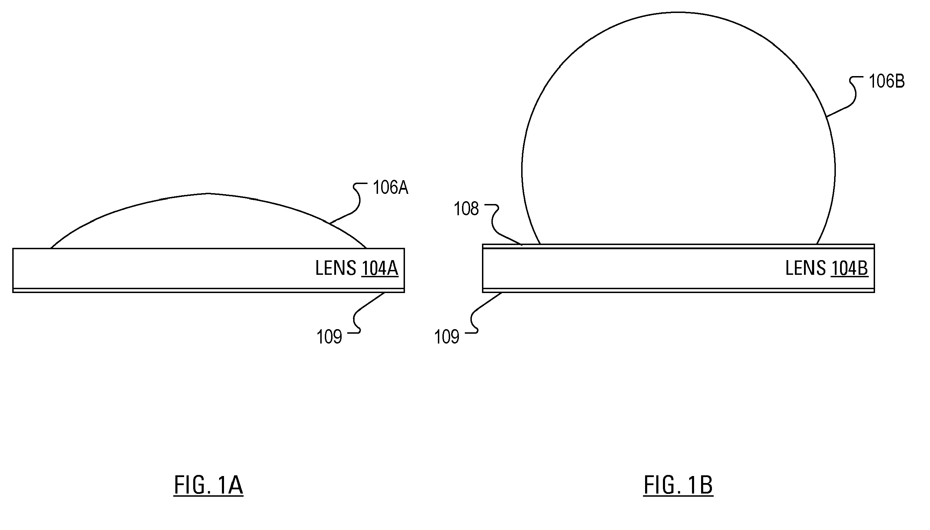

FIG. 1A illustrates a first proximity detector lens 104A. A first amount of matter 106A rests on the first proximity detector lens 104A.

FIG. 1B illustrates a second proximity detector lens 104B. In FIG. 1B, the second proximity detector lens 104B includes an anti-fingerprint layer 108. A second amount of matter 106B rests on the anti-fingerprint layer 108.

Both the first proximity detector lens 104A and the second proximity detector lens 104B may be coated, on the underside, with IR transmitting ink layer 109. The IR transmitting ink layer 109 can be selected for color and for which wavelengths the IR transmitting ink layer 109 transmits, to fulfill various needs on transparent sheet material like smart phone touch screens. Example IR transmitting inks suitable for the IR transmitting ink layer 109 include inks in the 1400N series from Seiko of Tokyo, Japan and inks in the GLS-HF series from Teikoku of Tokyo, Japan.

The difference between the shape that the matter 106A takes in FIG. 1A and the shape that the matter 106B takes in FIG. 1B should be evident and can be explained as being a result of the first proximity detector lens 104A (FIG. 1A) being hydrophilic and the anti-fingerprint layer 108 being hydrophobic. As a consequence of the hydrophobic quality of the anti-fingerprint layer 108, the second amount of matter 106B displays a greater surface tension that the first amount of matter 106A.

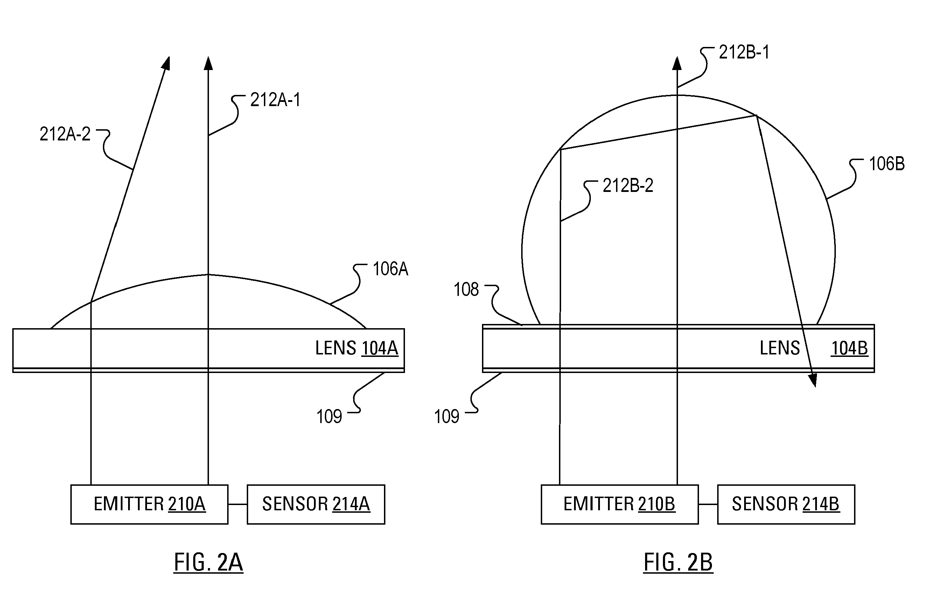

FIG. 2A illustrates a first emitter 210A of infrared radiation positioned under the first proximity detector lens 104A with a first IR sensor 214A. FIG. 2B illustrates a second emitter 210B of infrared radiation positioned under the second proximity detector lens 104B with a second IR sensor 214B.

In FIG. 2A, a first beam 212A-1 of IR radiation is illustrated passing through a center point of the first amount of matter 106A. Additionally, a second beam 212A-2 of IR radiation is illustrated passing through an off-center point of the first amount of matter 106A. As the second beam 212A-2 passes through the boundary between the first amount of matter 106A and air, the second beam 212A-2 is refracted such that the second beam 212A-2, which is parallel to the first beam 212A-1 within the first amount of matter 106A, adopts a path toward the first beam 212A-1.

In operation, the first beam 212A-1 and the second beam 212A-2 may reflect from a proximate object and take a return path through the first amount of matter 106A, the first proximity detector lens 104A and the IR transmitting ink layer 109 to be received by the first IR sensor 214A. Based on information, received from the first emitter 210A, the first IR sensor 214A may assess how proximate the object is to the associated smart phone.

In FIG. 2B, a first beam 212B-1 of IR radiation is illustrated passing through a center point of the second amount of matter 106B. Additionally, a second beam 212B-2 of IR radiation is illustrated passing through an off-center point of the second amount of matter 106B. As the second beam 212B-2 arrives at the boundary between the second amount of matter 106B and air, the second beam 212B-2 is reflected such that the second beam 212B-2, which is initially parallel to the first beam 212B-1 within the second amount of matter 106B, adopts a path toward the first beam 212A-1 within the second amount of matter 106B. As the second beam 212B-2 arrives at another boundary between the second amount of matter 106B and air, the second beam 212B-2 is reflected such that the second beam 212B-2 adopts a path back toward the second proximity detector lens 104B.

In operation, the first beam 212B-1 may reflect from a proximate object and take a return path through the second amount of matter 106B, the anti-fingerprint layer 108, the second proximity detector lens 104B and the IR transmitting ink layer 109 to be received by the second IR sensor 214B. Also, the second beam 212B-2 may reflect, as illustrated, back to the second IR sensor 214B without having reached the object. Based on information, received from the second emitter 210B, the second IR sensor 214B may assess how proximate the object is to the associated smart phone. Given that the reflection of the first beam 212B-1 is inconsistent with the reflection of the second beam 212B-2, the second IR sensor 214B may not be able to form an accurate assessment regarding how proximate the object is to the associated smart phone.

An increase in reflected IR beams may be measured when the second proximity detector lens 104B (with the anti-fingerprint layer 108) is compared to the first proximity detector lens 104A in the presence (on the lens 104A or on the anti-fingerprint layer 108) of material, such as water, sweat or oil.

The increase in reflected IR beams may manifest as a reduced efficacy of proximity detection, as assessed by the second IR sensor 214B.

The first proximity detector lens 104A and the second proximity detector lens 104B may be considered to have a refractive index of around 1.52. Air, of course, may be considered to have a refractive index of 1.00. The IR transmitting ink layer 109 may be considered to have a refractive index of around 1.45. Face oil may be considered to have a refractive index of around 1.40.

In overview, it is proposed herein to provide an adapted system featuring a further layer on the underside of a proximity detector lens. When the further layer has appropriately selected refractive index and transparency, proximity detection, as assessed by an IR sensor in the adapted system, may be improved over a system lacking the further layer.

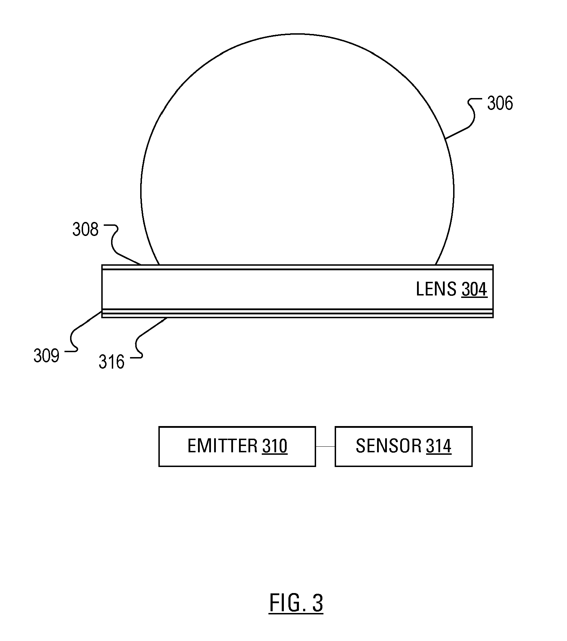

FIG. 3 illustrates an adapted proximity detection system. The adapted system includes, in common with the system of FIG. 2B, an IR emitter and an IR sensor. In particular, FIG. 3 illustrates a third emitter 310 of infrared radiation positioned, with a third IR sensor 314, under a third proximity detector lens 304. The third proximity detector lens 304 has an anti-fingerprint coating 308 on one side and an IR transmitting ink layer 309 on the other side. A third amount of matter 306 is illustrated on the anti-fingerprint coating 308. The adapted system includes, distinct from the system of FIG. 2B, a proximity detection improvement layer 316 on the IR transmitting ink layer 309.

As discussed briefly hereinbefore, it is proposed herein to select the proximity detection improvement layer 316 to have high transparency and high refractive index. To clarify, a "high" refractive index may be defined as being a refractive index that is greater than the refractive index of the IR transmitting ink layer 309. To further clarify, a "high" transparency may be defined as being a transparency that is in the range from 80% to 99% inclusive.

Example materials considered to be suitable for the proximity detection improvement layer 316 include titanium dioxide (TiO₂), zirconium dioxide (ZrO₂), tantalum pentoxide (Ta₂O₅), zinc oxide (ZnO), silicon monoxide (SiO) and phenyl silicone (phenyl type SiO).

As will be understood, the refractive index of a given material is different for different wavelengths of radiation. For proximity detection systems, the wavelength range of interest extends roughly from 850nm to 1000nm. At 850nm, the refractive index of the suggested materials are as follows:

| Material | Refractive index at 850nm |
|---|---|
| titanium dioxide (TiO₂), | 2.51 |
| zirconium dioxide (ZrO₂) | 2.17 |
| tantalum pentoxide (Ta₂O₅) | 1.78 |
| zinc oxide (ZnO) | 1.95 |
| silicon monoxide (SiO) | 1.40 |
| phenyl silicone (phenyl type SiO) | 1.51 |

Off-the-shelf components with high Refractive Index include LaSF glass from Schott North America, Inc. of Duryea, PA (n in between 1.9 and 2.1), sheets of polythiourethane (n = 1.61), sheets of polycarbonate (n = 1.59) or sheets of Acrylic film (n = 1.60 to 1.80) and Optical Adhesive (n around 1.58 - 1.65).

Conveniently, the proximity detection improvement layer 316 may be added to the IR transmitting ink layer 309 by a printing process such that manufacturing of the smart phone screen of which the proximity detector lens 304 forms a part may remain straightforward and relatively low cost. Details of the printing process are expected to be known to a person of ordinary skill in the art of working with these materials. Further conveniently, it may be shown that the addition of the proximity detection improvement layer 316 has little impact on the thickness of the smart phone screen of which the proximity detector lens 304 forms a part.

A method of manufacturing the mobile communication device display screen, a portion of which is illustrated in FIG. 3, may begin with obtaining material suitable for a mobile communication device display screen. The suitable material may be glass having a hydrophobic layer on a first side. Such glass is typically available from Corning Incorporated of Corning, NY and from Asahi Glass Company of Tokyo, Japan. Where a portion of the display screen is designated as the proximity detector lens 304 overlaying the third IR emitter 310, the method may include applying the IR transmitting ink layer 309 to the proximity detector lens 304. The method may also include printing the proximity detection improvement layer 316 on the IR transmitting ink layer 309.

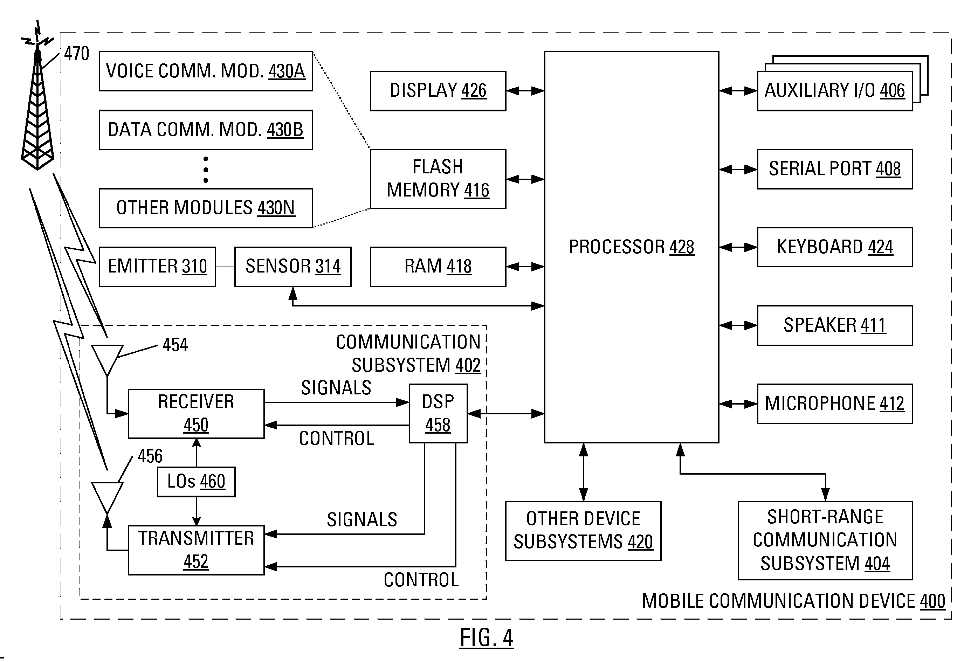

While, to this point, the proximity detection improvement layer 316 has been presented as particularly useful in the context of a proximity detector lens 304, it is also worth noting that the proximity detection improvement layer 316 may find uses on the underside of an optical touchpad navigating device (not shown) and, indeed, in any application similar to the proximity detector example, where something is determined through the transmission of IR through a medium and measurement of the reflections. FIG. 4 illustrates a mobile communication device 400 as an example of a device that may include the proximity detection system of FIG. 3. The mobile communication device 400 includes a housing, an input device (e.g., a keyboard 424 having a plurality of keys) and an output device (e.g., a display 426), which may comprise a full graphic, or full color, Liquid Crystal Display (LCD). In some embodiments, the display 426 may comprise a touchscreen display screen. In such embodiments, the keyboard 424 may comprise a virtual keyboard. Other types of output devices may additionally, or alternatively, be utilized. A processing device (a microprocessor 428) is shown schematically in FIG. 4 as coupled between the keyboard 424 and the display 426. The microprocessor 428 controls the operation of the display 426, as well as the overall operation of the mobile communication device 400, in part, responsive to actuation of the keys on the keyboard 424 by a user.

FIGS. 2A and 2B illustrate beams 212A-1, 212A-2, 212B-1, 212B-2 (collectively or individually 212) of IR radiation passing through the IR transmitting ink layer 109, the proximity detector lens 104, the amount of matter 106 and, in the case illustrated in FIG. 2B, the anti-fingerprint layer 108. Notably, all four of the illustrated beams 212 of IR radiation arrive at the IR transmitting ink layer 109 normal to the plane defined by the proximity detector lens 104. Accordingly, there is no refraction of the beams 212 illustrates in FIGS. 2A and 2B. In reality, however, the first emitter 210A, the second emitter 210B and the third IR emitter 310 emit IR radiation in a multitude of directions, with the result being that few, if any, of the beams of IR radiation that reach the plane defined by the proximity detector lens 104 are normal to that plane.

At the boundary between air (with refractive index nₐᵢᵣ = 1.00) and the IR transmitting ink layer 109 (with, e.g., refractive index nᵢᵣ = 1.45), a beam of IR radiation approaching at an angle θₐᵢᵣ is expected to be refracted in a manner in accordance with the relationship nᵢᵣ x sin(θᵢᵣ) = nₐᵢᵣ x sin(θₐᵢᵣ). According to this relationship, when the initial refractive index (θₐᵢᵣ, in this case) is less than the subsequent refractive index (θᵢᵣ, in this case), the beam is refracted toward an axis normal to the plane defined by the proximity detector lens 104. For example, when θₐᵢᵣ = 30 degrees, the resultant θᵢᵣ = 20.17 degrees. It follows that the beam incident at the border between the IR transmitting ink layer 109 and the proximity detector lens 104 may be defined, in part, by the angle θᵢᵣ = 20.17.

In the embodiment presented in FIG. 3, at the boundary between air and the proximity detection improvement layer 316 (with, e.g., refractive index n_{pdi} = 1.95), an incident beam is refracted further toward an axis normal to the plane defined by the proximity detector lens 104. For example, when θₐᵢᵣ = 30 degrees, the resultant θ_{pdi} = 14.86 degrees. At the boundary between the proximity detection improvement layer 316 and the IR transmitting ink layer 309, an incident beam is refracted away from the axis normal to the plane defined by the proximity detector lens 104. Notably, it follows that the beam incident at the border between the IR transmitting ink layer 109 and the proximity detector lens 104 may be defined, in part, by the angle θᵢᵣ = 20.17, which is the same as in the case wherein the proximity detection improvement layer 316 is absent.

It is worth noting that the IR transmitting ink layer 309 is not a transparent layer. Indeed, it is anticipated that the IR transmitting ink layer 309 will scatter the incident beams. That is, not all of the 30-degree-incident beams on the border between air and the IR transmitting ink layer 309 on the proximity detector lens 104 will continue on through the IR transmitting ink layer 109/309 and approach the border between the IR transmitting ink layer 109/309 and the proximity detector lens 104 at the angle θᵢᵣ = 20.17, as would be predicted if the IR transmitting ink layer 109/309 was transparent. For some beams, the angle will be higher; for other beams the angle will be lower. It can be shown, through simulation, that the presence of the proximity detection improvement layer 316 leads to an increase in the IR radiation that is emitted from the third amount of matter 306, expressed, say, as a percentage of the IR radiation that is emitted from the emitter 310. As a consequence of more IR radiation being emitted from the third amount of matter 306, compared to the IR radiation emitted from the second amount of matter 106B for the same initial conditions, it follows that comparatively more IR radiation will be returned to the third IR sensor 314 than would be returned to the second IR sensor 214B. With more IR radiation returned, it is anticipated that proximity detection would be improved.

As a general observation, it may be considered that, due to the presence of the proximity detection improvement layer 316, the signal to noise ratio of the radiation received by the third IR sensor 314 is higher than the signal to noise ratio of the radiation received by the second IR sensor 214B under identical conditions.

Elements of the proximity detection system of FIG. 3, including the third IR emitter 310 and the third IR sensor 314, are illustrated in FIG. 4, with the third IR sensor 314 in communication with the microprocessor 428 .

The housing may be elongated vertically, or may take on other sizes and shapes (including clamshell housing structures). In the case in which the keyboard 424 includes keys that are associated with at least one alphabetic character and at least one numeric character, the keyboard 424 may include a mode selection key, or other hardware or software, for switching between alphabetic entry and numeric entry.

In addition to the microprocessor 428, other parts of the mobile communication device 400 are shown schematically in FIG. 4. These may include a communications subsystem 402, a short-range communications subsystem 404, the keyboard 424 and the display 426. The mobile communication device 400 may further include other input/output devices, such as a set of auxiliary I/O devices 406, a serial port 408, a speaker 411 and a microphone 412. The mobile communication device 400 may further include memory devices including a flash memory 416 and a Random Access Memory (RAM) 418 and various other device subsystems 420. The mobile communication device 400 may comprise a two-way radio frequency (RF) communication device having voice and data communication capabilities. In addition, the mobile communication device 400 may have the capability to communicate with other computer systems via the Internet.

Operating system software executed by the microprocessor 428 may be stored in a computer readable medium, such as the flash memory 416, but may be stored in other types of memory devices, such as a read only memory (ROM) or similar storage element. In addition, system software, specific device applications, or parts thereof, may be temporarily loaded into a volatile store, such as the RAM 418. Communication signals received by the mobile device may also be stored to the RAM 418.

The microprocessor 428, in addition to its operating system functions, enables execution of software applications on the mobile communication device 400. A predetermined set of software applications that control basic device operations, such as a voice communications module 430A and a data communications module 430B, may be installed on the mobile communication device 400 during manufacture. As well, additional software modules, illustrated as an other software module 430N, which may comprise, for instance, a personal information manager (PIM) application, may be installed during manufacture. The PIM application may be capable of organizing and managing data items, such as e-mail messages, calendar events, voice mail messages, appointments and task items. The PIM application may also be capable of sending and receiving data items via a wireless carrier network 470 represented by a radio tower. The data items managed by the PIM application may be seamlessly integrated, synchronized and updated via the wireless carrier network 470 with the device user's corresponding data items stored or associated with a host computer system.

Communication functions, including data and voice communications, are performed through the communication subsystem 402 and, possibly, through the short-range communications subsystem 404. The communication subsystem 402 includes a receiver 450, a transmitter 452 and one or more antennas, illustrated as a receive antenna 454 and a transmit antenna 456. In addition, the communication subsystem 402 also includes a processing module, such as a digital signal processor (DSP) 458, and local oscillators (LOs) 460. The specific design and implementation of the communication subsystem 402 is dependent upon the communication network in which the mobile communication device 400 is intended to operate. For example, the communication subsystem 402 of the mobile communication device 400 may be designed to operate with mobile data communication networks and voice communication networks, such as, but not limited to, Long Term Evolution (LTE). Other types of data and voice networks, both separate and integrated, may also be utilized with the mobile communication device 400.

The mobile communication device 400 may send and receive communication signals over the wireless carrier network 470. Signals received from the wireless carrier network 470 by the receive antenna 454 are routed to the receiver 450, which provides for signal amplification, frequency down conversion, filtering, channel selection, etc., and may also provide analog to digital conversion. Analog-to-digital conversion of the received signal allows the DSP 458 to perform more complex communication functions, such as demodulation and decoding. In a similar manner, signals to be transmitted to the wireless carrier network 470 are processed (e.g., modulated and encoded) by the DSP 458 and are then provided to the transmitter 452 for digital to analog conversion, frequency up conversion, filtering, amplification and transmission to the wireless carrier network 470 (or networks) via the transmit antenna 456.

In addition to processing communication signals, the DSP 458 provides for control of the receiver 450 and the transmitter 452. For example, gains applied to communication signals in the receiver 450 and the transmitter 452 may be adaptively controlled through automatic gain control algorithms implemented in the DSP 458.

In a data communication mode, a received signal, such as a text message or web page download, is processed by the communication subsystem 402 and is input to the microprocessor 428. The received signal is then further processed by the microprocessor 428 for output to the display 426, or alternatively to some auxiliary I/O devices 406. A device user may also compose data items, such as e-mail messages, using the keyboard 424 and/or some other auxiliary I/O device 406, such as a touchpad, a rocker switch, a thumb-wheel, a trackball, a touchscreen, or some other type of input device. The composed data items may then be transmitted over the wireless carrier network 470 via the communication subsystem 402.

In a voice communication mode, overall operation of the device is substantially similar to the data communication mode, except that received signals are output to the speaker 411, and signals for transmission are generated by a microphone 412. Alternative voice or audio I/O subsystems, such as a voice message recording subsystem, may also be implemented on the mobile communication device 400. In addition, the display 426 may also be utilized in voice communication mode, for example, to display the identity of a calling party, the duration of a voice call, or other voice call related information.

The short-range communications subsystem 404 enables communication between the mobile communication device 400 and other proximate systems or devices, which need not necessarily be similar devices. For example, the short-range communications subsystem may include an infrared device and associated circuits and components, or a Bluetooth™ communication module to provide for communication with similarly-enabled systems and devices, or a near field communication module, etc.

The above-described implementations of the present application are intended to be examples only. Alterations, modifications and variations may be effected to the particular implementations by those skilled in the art without departing from the scope of the application, which is defined by the claims appended hereto.

## Claims

1. A proximity detector lens comprising:
a hydrophobic layer (308) on a first side of the lens (304);
an infrared transmitting ink layer (309) on a second side of the lens, the infrared transmitting ink layer having an infrared transmitting ink layer refractive index; and
a proximity detection improvement layer (316) on the infrared transmitting ink layer, the proximity detection improvement layer having a proximity detection improvement layer refractive index at a given wavelength that is greater than the infrared transmitting ink layer refractive index at the given wavelength.

2. The proximity detector lens of claim 1 wherein the infrared transmitting ink layer refractive index is around 1.45 index at the given wavelength.

3. The proximity detector lens of claim 2 wherein the proximity detection improvement layer comprises one of titanium dioxide, zirconium dioxide, tantalum pentoxide, zinc oxide, silicon monoxide and phenyl silicone.

4. The proximity detector lens of any one of claims 1 to 3 wherein the given wavelength is in the range from 850nm to 1000nm.

5. A proximity detection system comprising:
an emitter (310) of infrared radiation;
a sensor (314) of infrared radiation;
a proximity detector lens (304) as claimed in any preceding claim, the lens overlaying the emitter and arranged such that the second side of the lens faces the emitter.

6. A mobile communication device (400) comprising a proximity detection system as claimed in claim 5, the device comprising a display screen (426), a portion of the display screen designated as the proximity detector lens overlaying the emitter.

7. A method of manufacturing a proximity detector lens (304) designed for overlaying an emitter of infrared radiation, the mobile communication device display screen having a hydrophobic layer on a first side, the method comprising:
applying an infrared transmitting ink layer (309) on a second side of the lens portion of the display screen, the infrared transmitting ink layer having an infrared transmitting ink layer refractive index; and
printing a proximity detection improvement layer (316) on the infrared transmitting ink layer, the proximity detection improvement layer having a proximity detection improvement layer refractive index at a given wavelength that is greater than the infrared transmitting ink layer refractive index at the given wavelength.
